# EUROPEAN PATENT APPLICATION

(11) **EP 4 656 589 A1**
(43) Date of publication of application: **03.12.2025**
(21) Application number: 24178908.0
(22) Date of filing: 29.05.2024
(51) Int. Cl.: C01B 3/00

(54) **METHOD OF REVERSIBLY STORING AND RELEASING HYDROGEN IN A BICARBONATE/FORMATE-BASED AQUEOUS REACTION SYSTEM, THE METHOD COMPRISING THE ADDITION OF CARBONATE SALTS**

(71) Applicant: AKROS Energy GmbH, 18299 Rostock-Laage (DE)
(72) Inventor: Massa, Jonas, 18299 Rostock-Laage (DE); Turan, Volkan, 18299 Rostock-Laage (DE); Sponholz. Peter, 18299 Rostock-Laage (DE); Abdel-Mageed. Ali M., 18106 Rostock (DE); Al-Yusufi, Mohammed, 18059 Rostock (DE); Beller. Matthias, 18211 Nienhagen (DE); Hu, Yuya, 18059 Rostock (DE); Junge. Henrik, 18147 Rostock (DE); Sang. Rui, 252000 Shandong (CN); Stein, Carolin, 18057 Rostock (DE); Wohlrab. Sebastian, 18311 Ribnitz-Damgarten (DE)
(74) Representative: Hoffmann Eitle

(57) **Abstract**

The present invention relates to a method of reversibly storing and releasing hydrogen in a bicarbonate/formate-based aqueous reaction system, wherein the method comprises providing a carbonate salt and adding said carbonate salt to the bicarbonate/formate-based aqueous reaction system.

## Description

### Field of the invention

The present invention relates to a method of reversibly storing and releasing hydrogen in a bicarbonate/formate-based aqueous reaction system and a gas mixture obtained by a hydrogen-release reaction according to said method.

### Background art

Anthropogenic CO₂ emissions are a leading contributor to global warming. One way to reduce the reliance on CO₂-emitting fossil fuels is to transition towards green renewables such as wind and solar energy sources. Unlike the chemical energy storage of fossil fuels, solar and wind can only intermittently provide energy. A chemical storage system which buffers excesses and deficiencies in energy generated from solar and wind sources is therefore highly desired.

One candidate for chemical energy storage is hydrogen. Hydrogen can be generated from electrolysis of water using surplus electricity provided by wind and solar sources during peak times. The gas can be stored and the energy can be released on demand, e.g. in a hydrogen fuel cell. However, gaseous hydrogen is unsuitable for storage since it has a very low volumetric energy density and thus relies on liquefaction or compression in a high-pressure cylinder for storage. Both processes are highly energy intensive and require extensive safety measures.

It is therefore desirable to contain hydrogen in a chemical storage system for reversible storage and release. One proposed solution is a bicarbonate/formate-based aqueous reaction system. This system relies on the reduction of bicarbonate to formate salts or formic acid in order to store hydrogen, and the oxidation of formate to bicarbonate to release hydrogen. The system can be described according to the following exemplary reaction formulae:

KHCO₃ + H₂ -> HCOOK + H₂O Eqn. 1

HCOOK + H₂O -> H₂ + KHCO₃ Eqn. 2

Both reactions typically take place in the presence of a catalyst. However, many commercially available catalysts such as Pd/C are not entirely selective towards dehydrogenation and can yield unwanted side products such as carbon monoxide (CO). Hydrogen released from a formate/bicarbonate reaction system is therefore frequently contaminated with CO. This poses a problem to the use of said CO-contaminated hydrogen in low-temperature fuel cells which have Pt anodes that are easily poisoned by CO. Consequently, an energy and cost-intensive purification step is required to separate any CO contamination from released gas mixture. Such a step could be avoided if the released hydrogen would have a higher purity.

It is therefore an objective to provide a method for reversibly storing and releasing hydrogen from an aqueous bicarbonate/formate-based reaction system, wherein the released hydrogen is highly pure and preferably free of CO contamination.

### Brief discussion of the present invention

According to a first aspect, the present invention relates to a method of reversibly storing and releasing hydrogen in a bicarbonate/formate-based aqueous reaction system, wherein the method comprises providing a carbonate salt and adding said carbonate salt to the bicarbonate/formate-based aqueous reaction system.

In a preferred embodiment, the concentration of added carbonate in the reaction system is less than 1 M, preferably less than 0.5 M, even more preferably between 0.2 and 0.4 M, and yet more preferably between 0.28 M and 0.32 M.

In a preferred embodiment, the provided carbonate salt is Li₂CO₃, Na₂CO₃, K₂CO₃, (NH₄)₂CO₃, MgCO₃ or CaCO₃, preferably K₂CO₃.

In a preferred embodiment, the bicarbonate/formate-based aqueous reaction system and the added carbonate salt comprise the same counterions.

In a preferred embodiment, the counterions are K⁺-ions.

In a preferred embodiment, the bicarbonate/formate-based aqueous reaction system is in the presence of a catalyst to hydrogenate bicarbonate and dehydrogenate formate.

In a preferred embodiment, the catalyst is a heterogenous catalyst, preferably a Pd-based catalyst, such as a Pd/C catalyst or a Pd/TiO₂-based catalyst. Preferably, the Pd/TiO₂-based catalyst is obtainable by a deposition precipitation method, comprising the steps of:
- providing a porous support material having a BET surface area of at least 150 m²/g when measured with nitrogen at 77 K, wherein the porous support material is TiO₂-based support material;
- performing a deposition precipitation of Pd on the porous TiO₂-based support material to obtain a Pd/TiO₂-based catalyst precursor;
- washing, drying, and activating the Pd/TiO₂-based catalyst precursor to obtain the Pd/TiO₂-based catalyst.

In a preferred embodiment, the catalyst is provided in powder form or a shaped body form.

In a preferred embodiment, the present invention relates to a method of releasing hydrogen.

According to a second aspect, the present invention relates to a gas mixture obtained by a hydrogen-release reaction in the method according to the first aspect.

### Brief discussion of the figure

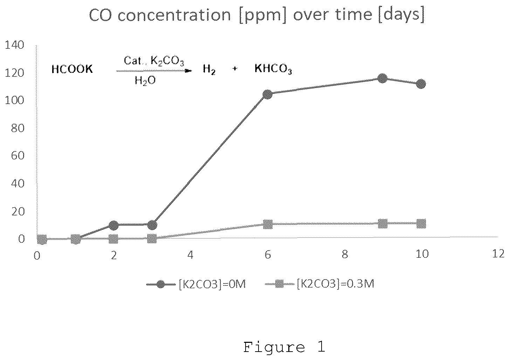

Figure 1 is a graphic representation of results of an experiment according to Example A discussed below and illustrates curves of a CO concentration [ppm] over time [days].

### Detailed discussion of the present invention

Hereafter, the present invention will be discussed in detail.

### Method of reversibly storing and releasing hydrogen

According to a first aspect, the present invention relates to a method of reversibly storing and releasing hydrogen in a bicarbonate/formate-based aqueous reaction system, wherein the method comprises providing a carbonate salt and adding said carbonate salt to the bicarbonate/formate-based aqueous reaction system.

The term "reversibly storing and releasing hydrogen in a bicarbonate/formate-based aqueous reaction system" as used herein refers to a method of storing hydrogen to provide stored hydrogen and a method of releasing hydrogen to provide released hydrogen in the bicarbonate/formate-based aqueous reaction system discussed below. As is known in the art, the reactions occurring in the below described system are reversible so that the two methods cannot be strictly separated from one another. "Reversibly storing and releasing hydrogen in a bicarbonate/formate-based aqueous reaction system" involves customary and common steps. These are, *inter alia,* providing a reaction vessel, such as a reactor suitable to carry out the methods; providing the reagents of the reaction system discussed below, such as bicarbonate salts, formate salts and hydrogen; providing water as an aqueous medium; setting appropriate temperature, pressure and reaction run times; and separating the products. Although the reactions are reversible and therefore not strictly separable as discussed above, the position of the equilibrium may be influenced to favour the method of storing hydrogen or the method releasing hydrogen in the bicarbonate/formate-based aqueous reaction system. This may be done accordance with Le Chatelier's principle as is known and customary in the art. Through such an influence on the position of the equilibrium, the method of storing hydrogen and the method of releasing hydrogen separated from one another as far as possible. Thus, it is possible for one method to dominate over the other at one place and time. For instance, by pressurizing a reactor containing the aqueous reaction system with hydrogen in a first place and time, the method for hydrogen storage can be favoured in the first place and time over the method of releasing hydrogen. Likewise, by adjusting the composition of the reaction system to contain more hydrogen carrier (here, formate) than hydrogen carrier precursor (i.e. the non-hydrogenated version of the hydrogen carrier, here bicarbonate) and by not providing pressurized hydrogen, at a second place and time, both different from the first, the method for hydrogen release can be favoured.

In a preferred embodiment, the present invention relates to a method of releasing hydrogen in a bicarbonate/formate-based aqueous reaction system, wherein the method comprises providing a carbonate salt and adding said carbonate salt to the bicarbonate/formate-based aqueous reaction system. In this context, the method involves influencing the position of the equilibrium so that the method of releasing hydrogen dominates over the method storing hydrogen. This method is used to provide released hydrogen.

The bicarbonate/formate-based aqueous reaction system is an aqueous reaction system comprising bicarbonate and formate salts. Typically, this will be in the form of an aqueous solution comprising bicarbonate and formate salts. Unless otherwise specified, the simpler expression "the reaction system" may also refer to the bicarbonate/formate-based aqueous reaction system. Reactions occurring in the reaction system are a 'hydrogen-storage' hydrogenation reaction of bicarbonate and a 'hydrogen-release' dehydrogenation of formate reaction.

The claimed method comprises providing a carbonate salt and adding said carbonate salt to the reaction system. The provided and added carbonate salt may be in a solid form, in a dissolved form or in a dispersion. Providing and adding the added salt to the reaction system may also comprise combining and mixing dry salts before dissolving them. Following the addition of the provided carbonate salt to the reaction system, the bicarbonate/formate-based aqueous reaction system comprises carbonate salts, bicarbonate salts and formate salts dissolved in water. Typically, the reaction system substantially consists of carbonate salts, bicarbonate salts and formate salts dissolved in water. The reaction system has thus the components formate salt (A₁HCOO), bicarbonate salt (A₂HCO₃) and carbonate salt (A₃CO₃), wherein A₂, A₂ and A₃ are counterions, dissolved in water. Preferably, the reaction system comprises at least 75 wt% of the components A₁HCOO, A₂HCO₂, and A₃CO₃, more preferably at least 80 wt%, more preferably at least 90 wt%, more preferably at least 95 wt%, more preferably at least 99 wt%, and even more preferably at least 99.9 wt%. The above mentioned wt% are relative to the total dry weight of the reaction system.

The present inventors have unexpectedly found that by providing and adding a carbonate salt to the reaction system, the CO concentration in the hydrogen-based gas mixture released from the reaction system in a hydrogen-release reaction is very low. The hydrogen released from such a reaction system is therefore highly pure, uncontaminated and ready for use even in a low temperature PEM (proton-exchange membrane / polymer electrolyte membrane) hydrogen fuel cell. An energy and cost-intensive gas purification step is therefore not required.

In a preferred embodiment, the concentration of added carbonate in the reaction system is less than 1 M, preferably less than 0.5 M, even more preferably between 0.2 and 0.4 M, and yet more preferably between 0.28 M and 0.32 M. It has been found that the CO concentration is particularly low if the added carbonate concentration is within the above range. It is also believed that at this concentration, the efficiency of the hydrogen-release reaction is particularly high.

The present invention also relates to an alternative method of reversibly storing and releasing hydrogen in a bicarbonate/formate-based aqueous reaction system, wherein the method comprises adjusting the carbonate concentration in the aqueous reaction system, so that the adjusted carbonate concentration is between 0.2 and 0.4 M, and preferably between 0.28 and 0.32 M. All definitions used above apply. This method is independently combinable with all other embodiments and aspects mentioned herein. All subsequently mentioned embodiments are both preferred embodiments of the method of the first aspect and the alternative method discussed in this paragraph. Where the present disclosure generally refers to the "added" and/or the "provided" carbonate, this may, in the context of the alternative method, be understood as the "adjusted" carbonate. The method preferably includes self-adjusting of the concentration by the reaction system.

In a preferred embodiment, the sum of the concentrations of bicarbonate and formate is between 1 M and 15 M, preferably between 2 M and 10 M, and even more preferably between 4 M and 6 M.

In a preferred embodiment, the ratio of the concentration of carbonate to the sum of the concentrations of bicarbonate and formate in the aqueous reaction system is between 10:1 and 1:1000, preferably between 5:1 and 5:1000, more preferably between 1:1 and 1:100, and even more preferably between 2:100 and 10:100.

In preferred embodiment, the provided carbonate salt is Li₂CO₃, Na₂CO₃, K₂CO₃, (NH₄)₂CO₃, MgCO₃ or CaCO₃. Consequently, the A₃ counterions are Li⁺-ions, Na⁺-ions, K⁺-ions, (NH₄)⁺-ions, Mg²⁺-ions or Ca²⁺-ions. Preferably, the provided carbonate salt is K₂CO₃ with A₃ counterions being K⁺-ions.

In a preferred embodiment, the bicarbonate/formate-based aqueous reaction system and the added carbonate salt comprise the same counterions. Consequently, A₂, A₂ and A₃ are all the same. Typically, no further counterions are present other than those associated with the conventional impurities of the salts. For instance, in one embodiment A₂, A₂ and A₃ being all the same, comprise at least 95 mol% of the counterions to the carbonate, bicarbonate and formate in the aqueous reaction system, preferably at least 97 mol%, and even more preferably at least 99 mol%. In a particularly preferred embodiment, the counterions are K⁺-ions, meaning that A₁, A₂ and A₃ are all K⁺. It is believed that when A₁, A₂ and A₃ are all K⁺, the efficiency of hydrogen-release reaction is particularly high.

In a preferred embodiment, the bicarbonate/formate-based aqueous reaction system is in the presence of a catalyst to hydrogenate bicarbonate and dehydrogenate formate. Typically, this catalyst is configured to hydrogenate bicarbonate and dehydrogenate formate in a manner consistent with the chemical equations given above. Preferably, the same catalyst catalyzes the hydrogenation of bicarbonate and the dehydrogenation of formate.

The catalyst may not be particularly limited. The catalyst is preferably a heterogeneous catalyst. Exemplary catalysts include Pd-based catalysts, such as Pd₄S, Pd, Pd-Au, Pd@Ag, Pd-Cu₂O, PdS, Pd/C, Pd/Al₂O₃, Pd/TiO₂.

In a preferred embodiment, the catalyst is a Pd/C catalyst or a Pd/TiO₂-based catalyst.

The Pd/TiO2-based catalyst is preferably a Pd/TiO2-based catalyst obtainable by a deposition precipitation method, comprising the steps of:
- providing a porous support material having a BET surface area of at least 150 m²/g when measured with nitrogen at 77 K, wherein the porous support material is TiO₂-based support material;
- performing a deposition precipitation of Pd on the porous TiO₂-based support material to obtain a Pd/TiO₂-based catalyst precursor;
- washing, drying, and activating the Pd/TiO₂-based catalyst precursor to obtain the Pd/TiO₂-based catalyst.

The term "Pd/TiO₂-based catalyst" describes a catalyst substantially comprising palladium on TiO₂. In one embodiment, the term describes a catalyst substantially consisting of Pd on TiO₂. The palladium is deposited on TiO₂ by means of a deposition precipitation method as further described below. The term "TiO₂" refers to a material that is substantially TiO₂ but may comprise oxygen defects and/or may be partially reduced as is common in the art. The material may therefore also be referred to as TiOₓ wherein 1.90 < X ≤ 2, preferably X = 1.96.

The Pd/TiO₂-based catalyst is obtainable by a deposition precipitation method comprising the steps listed above. The steps are discussed in more detail below.

The first step involves providing a porous support material having a BET surface area of at least 150 m²/g when measured with nitrogen at 77 K. The support material (which may also be referred to as "the porous support material") is TiO₂-based support material. This step may be realised by direct synthesis of a porous support material which is based on TiO₂ or by obtaining a commercially available support material which is based on TiO₂. TiO₂-based support material substantially comprises TiO₂, within the common stoichiometric bounds discussed above. In one embodiment, TiO₂-based support material comprises at least 70 wt% TiO₂, wherein the remaining wt% make up modifications as discussed below and/or impurities. In other embodiments, TiO₂-based support material comprises at least 80 wt% TiO₂, at least 90 wt%, at least 95 wt%, or at least 99 wt%.

The second step involves performing a deposition precipitation of Pd on the porous support material to obtain a Pd/TiO₂-based catalyst precursor. The term "deposition precipitation" has its customary meaning as used in the art and refers to the precipitation of a metal precursor on a suspended support material. The term "Pd" in the specific context of "performing a deposition precipitation of Pd" is not particularly limited and does not only refer to elemental Pd. Rather, it refers to typical Pd-containing precursors such as Pd salts and/or colloidal Pd suspensions.

The third step involves washing, drying, and activating the Pd/TiO₂-based catalyst precursor to obtain the Pd/TiO₂-based catalyst. The washing method is not particularly limited and may include any washing methods typically used in the art. In one embodiment, washing comprises rinsing the precursor with deionised water to discharge impurities. The drying method is not particularly limited and may include any drying methods typically used in the art. These may include drying at room temperature and pressure or under reduced pressure and/or at elevated temperature. In all the aforementioned methods, a desiccant substance such as silica gel may be kept in close contact to the precursor. Activating the precursor to yield the catalyst refers to the reduction of adsorbed Pd-ions to elemental Pd and/or more generally, the conversion of oxidised Pd species in the catalyst precursor to elemental Pd. The activating method is not particularly limited and may include any activating method typically used in the art. Typically, such an activating method comprises reduction in the presence of hydrogen gas. In a preferred embodiment, activating is carried out at elevated temperatures under hydrogen flow and in the presence of an inert carrier gas, such as nitrogen, argon and/or helium.

Following the third step, the obtained Pd/TiO₂-based catalyst is typically hermetically sealed and stored under an inert atmosphere for storage. Nitrogen, argon and/or helium gas may be used for this purpose.

The present inventors have unexpectedly found that a Pd/TiO₂-based catalyst obtained by the above method comprises particularly small and highly dispersed Pd clusters. Such small clusters lead to a particularly high catalytic activity in the dehydrogenation of formate and/or hydrogenation of bicarbonate. It is believed that the small cluster size and high dispersion is related to the relatively high surface area of the provided porous support material. Notably, the specific surface areas of the support materials based on TiO₂ known in the art are lower with only ca. 100 m²/g (cf. Mori et al (JACS, 2018, 140, 8902-8909, ACS publications) and Zhang et al (Journal of Catalysis, 405, 2022, 152-163, Elsevier)). The obtained Pd/TiO₂-based catalysts comprise Pd clusters of < 1 nm. Conversely, Pd/TiO₂-based catalysts prepared from TiO₂-based substrate materials with a lower surface area are larger and less dispersed, leading to a lower catalytic activity.

In a preferred embodiment, the Pd-loading in the Pd/TiO₂-based catalyst is 0.5-1.5 wt%, based on the total mass of the Pd/TiO₂-based catalyst, preferably 0.8-1.2 wt%, wherein the Pd-loading is determined by inductively coupled plasma optical emission spectroscopy (ICP-OES). The Pd-loading amount can be controlled by adjusting the concentration of the Pd precursor during the deposition precipitation. As is known in the art, the nominal Pd loading and the Pd loading determined by ICP-OES may differ slightly from one another.

In a preferred embodiment, the deposition precipitation is performed in an aqueous solution using at least one Pd-salt.

In one embodiment, this is carried out at room temperature, whereas in other embodiments this may be elevated temperatures, e.g. at at least 40 °C, at least 50 °C, or at least 60 °C. The Pd-salt may not be particularly limited. The deposition precipitation may be carried out for at least 1 hr, preferably at least 5 hrs, and even more preferably overnight. Following the deposition precipitation, the water may be removed *in vacuo* and the composition may be dried in an oven, optionally at elevated temperature and reduced pressure. Alternatively, the catalyst precursors may be collected using a filter, such as a micron filter and/or a dialysis membrane.

In a preferred embodiment, the at least one Pd-salt comprises Pd(NO₃)₂.2H₂O, Pd(CH₃COO)₂ or PdCl₂. Preferably, the at least one Pd-salt comprises Pd(NO₃)₂.2H₂O. In a particularly preferred embodiment, at least one Pd-salt is Pd(NO₃)₂.2H₂O. It has been found that Pd(NO₃)₂.2H₂O as a Pd-salt/metal precursor yields Pd/TiO₂-based catalysts according to the present invention with particularly high catalytic activity in the dehydrogenation of formate and/or hydrogenation of bicarbonate.

In a preferred embodiment, the TiO₂-based support material based on TiO₂ has a BET surface area of at least 200 m²/g when measured with nitrogen at 77 K, preferably at least 225 m²/g. It has been found that support materials based on TiO₂ with high BET surface areas yield particularly small and dispersed Pd-clusters and highly catalytically active Pd/TiO₂-based catalysts.

In a preferred embodiment, the Pd/TiO₂-based catalyst is particulate. Preferably, the particle size is at most 100 nm, preferably at most 80 nm, preferably at most 60 nm, preferably at most 40 nm, preferably at most 20 nm, preferably at most 15, and most preferably at most 10 nm. The particle sizes mentioned above are average particle sizes determined from TEM analysis. To add statistic weight to the analysis, at least 100 particles are measured.

In a preferred embodiment, the support material is a CeO₂-modified TiO₂-based support material. A "CeO₂-modified TiO₂-based support material" is a TiO₂-based support material comprising a CeO₂-modification. The method of CeO₂-modification is not particularly limited and any method practised in the art may be used. It has been found that Pd/TiO₂-based catalysts based on a CeO₂-modified TiO₂-based support material are particularly catalytically active. It is believed that CeO₂ is a more reducible support having a higher affinity for the formation of surface oxygen defects. This is believed to have a stabilising effect on the Pd metal clusters, a metal-oxide mediated charge transfer effect, and further adsorption sites.

In a preferred embodiment, the CeO₂-modified TiO₂-based support material comprises at least 25wt% CeO₂, and preferably at most 30 wt% CeO₂, wherein the wt% is the amount of Ce determined by ICP-OES relative to the total amount of the Pd/TiO₂-based catalyst. In a particularly preferred embodiment, the CeO₂-modified TiO₂-based support material comprises 30 wt% CeO₂. It is observed that at this wt%, the catalytic activity of the catalyst is optimised. The remaining wt% of all embodiments discussed in this paragraph are preferably TiO₂.

In a preferred embodiment, the CeO₂-modified TiO₂-based support material is prepared by a deposition precipitation of CeO₂ on porous TiO₂ having a BET surface area of at least 150 m²/g when measured with nitrogen at 77 K, followed by calcination step. The deposition precipitation of CeO₂ on porous TiO₂ is not particularly limited and any method typically used in the art may be used. In one embodiment, a Ce-salt is dissolved in water and the porous TiO₂ is added. In one embodiment, this is carried out at room temperature, whereas in other embodiments this may be elevated temperatures, e.g. at at least 40 °C, at least 50 °C, or at least 60 °C. The Ce-salt is not particularly limited. In one embodiment, the Ce-salt is any of CeCl₃, Ce₂(SO₄)₃, Ce(OH)₄, Ce₂(CO₃)₃, and Ce(NO₃)₃.6H₂O. In a preferred embodiment, the Ce-salt is Ce(NO₃)₃.6H₂O. The deposition precipitation may be carried out for at least 1 hr, preferably at least 5 hrs, and even more preferably overnight, i.e. for 12 hrs. Following the deposition precipitation, the water may be removed *in vacuo* and the composition may be dried in an oven, optionally at elevated temperature and reduced pressure. The calcination step is not particularly limited and may include any method typically practised in the art. In one embodiment, calcination comprises heating the substrate in air. In one embodiment, calcination comprises heating the substrate in air to at least 200 °C, preferably at least 300°C and even more preferably at least 390 °C.

The form of the catalyst may not be particularly limited. In one embodiment, the catalyst is provided in powder or a shaped body form.

The shaped body may comprise the Pd/TiO₂-based catalyst and graphitic carbon as a binder, and is obtained by pressing with a pressure of at least 1 ton/cm².

The shaped body thus obtained may have a mass of (around) 10 - 50 mg, for example 15 - 40 mg, or 18 - 32 mg, such as 20 mg or 30 mg, preferably 20 mg. It is preferable that, after pressing, the shaped body is a cylinder like pellet, preferably with dimensions of (around) 2 mm in height and (around) 2 mm in diameter. In other words, the shaped body in a preferred embodiment may be obtained by pressing a total amount of (around) 20 mg of a mixture of Pd/TiO2-based catalyst and graphitic carbon as a binder with a pressure of at least 1 ton/cm2 into a shape of a cylinder like pellet with dimensions of (around) 2 mm in height and (around) 2 mm in diameter. For example, 20 grams of the mixture of Pd/TiO2-based catalyst and graphitic carbon may be provided and a total of 1000 shaped bodies may be formed therefrom (either at the same time or subsequently) by pressing with a pressure of at least 1 ton/cm². However, the present disclosure is not limited to a mixture with a mass of 20 grams. It is also possible to provide, for example 100g or 1000g of the mixture for forming the shaped bodies therefrom (e.g., with the above-noted mass of 20 mg per shaped body).

The present inventors have found that a shaped body obtained by pressing with a pressure of at least 1 ton/cm² has an unexpectedly high mechanical stability. This is particularly suitable for a use in a reversible hydrogen-and-release system based on aqueous hydrogenation of bicarbonate and aqueous dehydrogenation of formate discussed in more detail above. In such a system, the catalyst bed is typically subjected to significant mechanical disturbances leading to disintegration of the catalyst and/or contamination of the reactive composition with the catalyst. This problem is overcome by the provision of a mechanically stable and highly active catalyst.

In a preferred embodiment, the shaped body is obtained by pressing with a pressure of at least 1.5 ton/cm², preferably at least 2 ton/cm². In another preferred embodiment, pressure does not exceed 10 ton/cm², preferably it does not exceed 8 ton/cm², and even more preferably it does not exceed 5 ton/cm². In another preferred embodiment, the pressure is 1-10 ton/cm², preferably 1.5-8 ton/cm², and even more preferably 2-5 ton/cm². The above limitations of the pressure are also disclosed without any restrictions on the mass of sample.

In a preferred embodiment, the content of the graphitic carbon in the shaped body is 2-30 wt%, preferably 5-15 wt%, and even more preferably 7.5-12.5 wt%. It has been observed that when the content of graphitic carbon in the shaped body is in the above-disclosed wt% ranges, the catalytic activity of the shaped body in the dehydrogenation of formate and/or hydrogenation of bicarbonate is particularly high.

In a preferred embodiment, the shaped body has a compressive strength of (at least) 45 N/mm², more preferably of (at least) 47 N/mm², or even more preferably of (at least) 49 N/mm² or (at least) 50 N/mm². In the present context, compressive strength is defined by the maximum stress that the test specimen can withstand during deformation and/or by the breaking stress at which the test specimen is substantially deformed, i.e., breaks or collapses. It may be determined in a compressive strength test in which a test specimen is placed in a test apparatus and a compressive force is applied to the test specimen by a piston, whereby the dimension of the piston is chosen such that it allows for a full contact of the corresponding surface area of the shaped body with the piston. The force (stress) applied to the test specimen is recorded together with a deformation of the test specimen (displacement of the piston). The maximum stress applied to the test specimen without it breaking and/or the stress right before the test specimen is substantially deformed corresponds to the compressive strength of the test specimen. It has surprisingly been found that shaped bodies comprising the Pd/TiO₂-based catalyst have a relatively high compressive strength. For instance, in one embodiment, shaped bodies comprising a Pd/TiO₂-based catalyst prepared from a TiO₂-based support material having a BET surface area of at least 150 m²/g have a higher compressive strength than Pd/TiO₂-based catalyst prepared from TiO₂-based support materials having a BET surface area of less than 150 m²/g, e.g. 64 m²/g.

The method of reversibly storing and releasing hydrogen in a bicarbonate/formate-based aqueous reaction system may be carried out in a batch process or in continuous flow.

In one embodiment, the hydrogenation of bicarbonate takes place at a temperature of 20-100 °C, preferably 30-90 °C, preferably 40-80°C, preferably 50-70 °C, and even more preferably 55-65 °C. In one embodiment, the hydrogenation of bicarbonate takes place at a hydrogen pressure of 5-60 bar, preferably 10-50 bar, preferably 15-45 bar, preferably 20-40 bar, and even more preferably 25-35 bar. In one embodiment, the hydrogenation of bicarbonate takes place at a temperature of 20-100 °C and at a hydrogen pressure of 5-55 bar, preferably 30-90 °C and 10-50 bar, preferably 40-80°C and 15-45 bar, preferably 50-70 °C and 20-40 bar, and even more preferably 55-65 °C and 25-35 bar. The above embodiments pertain to the method of storing hydrogen.

In one embodiment, the dehydrogenation of formate is carried out by means of a hydrogen-release reaction in a batch process. Such a reaction may be carried out between 20-100 °C, preferably 30-90 °C, preferably 40-80°C, preferably 50-70 °C, and even more preferably 55-65 °C. The above embodiments are preferably carried out at atmospheric pressure. The above embodiments pertain to the method of releasing hydrogen. The dehydrogenation may be carried out at a pressure of up to 3 bar.

In another embodiment, the dehydrogenation of formate is carried out by means of a hydrogen-release reaction in a flow process. Such a reaction may be carried out between 20-100 °C, preferably 30-90 °C, preferably 40-80°C, preferably 50-70 °C, and even more preferably 55-65 °C. In one embodiment, the flow process is configured through a flow reactor having a catalyst bed. In one embodiment, the catalyst bed is not particularly limited. In another embodiment, the catalyst bed is an immobile catalyst bed. The above embodiments pertain to the method of storing hydrogen.

### Gas mixture obtained by a hydrogen-release reaction

In a second aspect, the present invention relates to a gas mixture obtained by a hydrogen-release reaction in the method according to the first aspect.

In a preferred embodiment, the gas mixture comprises less than 20 ppm of CO, preferably less than 10 ppm and even more preferably less than 1 ppm; the concentration of CO being measured by gas chromatography. In a most preferred embodiment, the gas mixture comprises substantially no CO, i.e. the CO concentration is below the detection limit.

Based on the foregoing discussion, the following examples and without wishing to be bound by theory, the problem has been solved to provide a method for reversibly storing and releasing hydrogen from an aqueous bicarbonate/formate-based reaction system, wherein the released hydrogen is highly pure and preferably free of CO contamination.

### Examples

### Example A - Dehydrogenation of formate

A bicarbonate/formate-based aqueous reaction system was prepared by dissolving 21.03 g of HCOOK in 25 mL of water containing 1.04 g of K₂CO₃ (final concentration of 0.3 M K₂CO₃) and 106 mg of a catalyst (0.93 wt% Pd/C-sigma-205753). All components were added to an 80 mL glass reactor equipped with a stirrer bar and kept under an argon atmosphere. The reaction mixture was heated to 60 °C and kept at this temperature under stirring for 10 days (Example A.1). At specified intervals, samples of the released gas mixture were extracted and analyzed by gas chromatography (GC). The extracted samples were very small compared to the total volume of released gas (at most < 5 vol%, typically less). Gas content was determined by gas-phase GC. GC measurements were carried out on one of two available systems:
GC a): HP Plot Q / FID - hydrocarbons, Carboxen / TCD - permanent gases, He carrier gas.
GC b): HP Plot Q / FID - hydrocarbons, Carboxen / TCD - permanent gases, Ar carrier gas.
The GC was calibrated using certified gas mixtures from commercial suppliers (Linde and Air Liquide) with the following gas vol%:
   GC a) :
   H₂: 1000 ppm, 0,25%, 0,5%, 1%, 5%, 10%, 25%, 50%, 100%
   CO: 10 ppm, 80 ppm, 250 ppm, 1000 ppm, 1%, 5%, 10%
GC b) :
   H₂: 0.25%, 0.50%, 1%, 5%, 10%, 25%, 50%, 100%
   CO: 80 ppm, 250 ppm, 1000 ppm, 1%, 5%, 10%
For both, calibration and reaction analysis, 5 mL of gas were injected with a gas-tight syringe under isobaric conditions. The systems allow for the determination of H₂ and CO within the ranges:
H₂ ≥ 0.10 vol% - 100 vol% [GC a)] 0.25 vol% - 100 vol% [GC b)]
CO ≥ 0.0010 vol% - 10 vol% [GC a)] 0.0080 vol% - 10 vol% [GC b)]

GC analysis provides the relative amounts of the different components of the collected gas. CO amounts were determined and their ratios established. The comparison of the same reaction system was set up without added potassium carbonate (Comparative Example A.2).

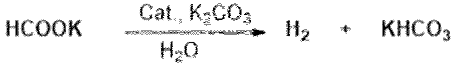

The results are tabulated below and graphically reproduced in Figure 1.

**Table A | Results of Experiment A**

| Time (days) | CO concentration [ppm] | |
|---|---|---|
| | Example A.1 | Comparative Example A.2 |
| | [K₂CO₃]= 0.3 M | [K₂CO₃]= 0 M |
| 0.125 (3 hrs) | n.d.* | n.d. |
| 1 | n.d. | n.d. |
| 2 | n.d. | <10 |
| 3 | n.d. | <10 |
| 6 | <10 | 104 |
| 9 | <10 | 115 |
| 10 | <10 | 111 |

| | | |
|---|---|---|
| * not detectable | | |

### Example B - Preparation of Pd/TiO₂-based catalyst

Commercially available TiO₂-based support materials were obtained having the characteristics laid out in Table B below.

Catalysts were synthesized on an ca. 3 g batch scale. The selected TiO₂-based supports were loaded with around 1 wt % Pd using deposition precipitation. An appropriate amount of Pd(NO₃)₂.₂H₂O was dissolved in 0.1 M NaOH under stirring at 70 °C for 30 mins. As an example 0.065 g of Pd(NO₃)₂.₂H₂O may be used in 50 mL of NaOH (0.1 M). The selected supports were immersed into the solutions and stirred at the same temperature for a further 2 hrs. Afterwards, the precipitate Pd/TiO₂-based catalyst precursor was filtered, washed with deionized water and dried over night at room temperature.

The material was then activated by reduction as follows. First the material was introduced into a tube furnace and purged by a flow of inert gas (50 ml min⁻¹ of N₂ or Ar) in a tube furnace for 30 min. Next, the temperature of the tube furnace was step-wisely increased up to 200°C (10°C min⁻¹). The material was then exposed to a flow of 10% H₂/N₂ (50 ml min⁻¹) at 200°C for 2 hours. The hydrogen flow was then exchanged by inert gas once again and the material was left to cool down slowly. Obtained Pd/TiO₂-based catalyst samples were collected and sealed in glass tubes.

It has been found that Pd(NO₃)₂.₂H₂O yields the most highly active catalysts. The catalysts can however be carried out using other Pd precursors, such as PdCl₂ or colloidal Pd.

**Table B | Preparative example and material study**

| | **Preparative Example B.1** |
|---|---|
| **TiO₂-based support materials** | TiO₂-M211 (Ventator GmbH, Duisburg, Germany) |
| **BET surface area/Specific surface area** | 225-300 m²/g |
| **Pd loading** | 0.8 wt% |
| **TiO₂ particle size** | 7 ± 2 nm |

### Example C - Preparation of Pd/TiO₂-based catalyst from a CeO₂-modified TiO₂-based support material

The preparation of Example B was modified as follows. Catalysts were prepared on a ca. 25 g scale. The high surface area TiO₂-based support was modified to include a CeO₂ layer. A CeO₂ layer was created on the TiO₂-based support using a deposition precipitation method. The procedure can be summarized as follows: 37.2 g Ce(NO₃)₃.6H₂O were dissolved in 1000 ml deionized water. 28 g Hombikat (M211) were added to Ce solution at 60 °C overnight. Water was then removed by rotary evaporation at 60 °C with speed 70 until total solvent removal. The mixture was then drying over night at 80 °C in an oven. Finally, a calcination step in air at 200 °C for 4 hrs (rate of heating 3°C/min) was carried out to yield a CeO₂-modified TiO₂-based support material.

Subsequently, the CeO₂-modified TiO₂-based support material was loaded with 0.5 wt% Pd using a precipitation deposition method and washed, dried and activated as described above. The final material was obtained and designated as Preparative Example C.1.

**Table C | Preparative example and material study**

| | **Preparative Example C.1** |
|---|---|
| **TiO₂-based support materials** | TiO₂-M211 (Ventator GmbH, Duisburg, Germany) |
| **BET surface area/Specific surface area** | 225-300 m²/g |
| **Pd loading** | 0.5 wt% |
| **CeO₂ loading** | 30 wt% (ICP-OES = 27.6 wt%) |
| **TiO₂ particle size** | 7 ± 2 nm |

### Example D - Preparation of shaped body comprising Pd/TiO₂-based catalyst

Shaped bodies were formed of the Pd/TiO₂-based catalyst.

20 g of the powdered catalysts listed below were combined with an appropriate amount of graphitic carbon binder (X% as described in the table below). The total amount (Pd/TiO₂ catalyst + graphitic carbon) was then mixed using a mortar to reach a homogenous mixture. Afterwards, the mixture was pressed into a cylinder like pellet (2 mm height x 2 mm diameter) under a pressure of 3 ton/cm². The following shaped bodies were obtained.

| | **P. Example D.1** | **P. Example D.2** | **P. Example D.3** | **P. Example D.4** | **P. Example D.5** |
|---|---|---|---|---|---|
| **Catalyst** | P. Example B.1 | P. Example B.1 | P. Example B.1 | P. Example B.1 | P. Example B. 1 |
| **Amount C binder** | 2.5 wt% | 5 wt% | 10 wt% | 15 wt% | 30 wt% |

## Claims

1. A method of reversibly storing and releasing hydrogen in a bicarbonate/formate-based aqueous reaction system, wherein the method comprises providing a carbonate salt and adding said carbonate salt to the bicarbonate/formate-based aqueous reaction system.

2. The method according to claim 1, wherein the concentration of added carbonate is less than 1 M, preferably less than 0.5 M, even more preferably between 0.2 and 0.4 M, and yet more preferably between 0.28 M and 0.32 M.

3. The method according to claims 1 or 2, wherein the provided carbonate salt is Li₂CO₃, Na₂CO₃, K₂CO₃, (NH₄)₂CO₃, MgCO₃ or CaCO₃, preferably K₂CO₃.

4. The method according to any of claims 1 to 3, wherein the bicarbonate/formate-based aqueous reaction system and the added carbonate salt comprise the same counterions.

5. The method according to claim 4, wherein the counterions are K⁺-ions.

6. The method according to any of claims 1 to 5, wherein the bicarbonate/formate-based aqueous reaction system is in the presence of a catalyst to hydrogenate bicarbonate and dehydrogenate formate.

7. The method according to claim 6, wherein the catalyst is a heterogenous catalyst, preferably a Pd-based catalyst, such as Pd/C or a Pd/TiO₂-based catalyst.

8. The method according to any of claims 6 or 7, wherein the catalyst is provided in powder form or a shaped body form.

9. The method of any of claims 1-8, which is a method of releasing hydrogen.

10. A gas mixture obtained by a hydrogen-release reaction in the method of any of claims 1 to 9.
